# EUROPEAN PATENT APPLICATION

(11) **EP 1 401 124 A2**
(43) Date of publication of application: **24.03.2004**
(21) Application number: 03021466.2
(22) Date of filing: 23.09.2003
(51) Int. Cl.: H04B 10/10, H04L 12/28

(54) **Optical subscriber network system for receiving broadcast/communication signals**

(30) Priority: 23.09.2002 KR 2002057538
(71) Applicant: SAMSUNG ELECTRONICS CO., LTD., Suwon-City, Kyungki-do (KR)
(72) Inventor: Kim, Chan-Youl, Paldal-gu Suwon-city Kyungki-do (KR); Kim, Chang-Dong, Paldal-gu Suwon-city Kyungki-do (KR); Lee, Chang-Hyun, Paldal-gu Suwon-city Kyungki-do (KR); Koh, Jun-Ho, Paldal-gu Suwon-city Kyungki-do (KR); Oh, Yun-Je, Paldal-gu Suwon-city Kyungki-do (KR)
(74) Representative: Grünecker, Kinkeldey, Stockmair & Schwanhäusser Anwaltssozietät

(57) **Abstract**

Disclosed is an optical subscriber network system for performing bidirectional transmission/reception of digital broadcast signals and Internet signals. The optical subscriber network system of the invention includes a server-end bidirectional optical transmitter and a subscriber-end bidirectional optical receiver. The server-end bidirectional optical transmitter includes: a first semiconductor laser for transmitting digital broadcast signals; a second semiconductor laser for transmitting downstream Internet data; a server-end photodiode for receiving upstream Internet data; a BPF (Band Pass Filter) mounted in front of the service-end photodiode, for selecting the upstream Internet data only; and, a multi-branch optical waveguide element for selecting I/O (Input/Output) data. The subscriber-end bidirectional optical receiver includes a subscriber-end multi-branch optical waveguide element for receiving/selecting data transmitted from the server-end bidirectional optical transmitter; a first photodiode for receiving digital broadcast data transmitted from the server-end bidirectional optical transmitter; a second photodiode for receiving downstream Internet data transmitted from the server-end bidirectional optical transmitter; and, a subscriber-end semiconductor laser for the upstream Internet data.

## Description

### BACKGROUND OF THE INVENTION

### 1. Field of the Invention

The present invention relates to an optical subscriber network, and more particularly to a bi-directional transmitting/receiving optical subscriber network having an asymmetric structure.

### 2. Description of the Related Art

Typically, a transmission bit interval is not synchronized with a reception bit interval due to a clock difference between a transmission system and the corresponding reception system Accordingly, a synchronization method is used to insure that the receiving system accurately receives each bit of data transmitted from the corresponding transmission system. Synchronization methods may be generally classified into a synchronous transmission mode and an asynchronous transmission mode. In a synchronous transmission mode, data is not sent in individual bits or bytes, but as frames of large data blocks. Frame sizes vary from a few bytes through 1500 bytes for Ethernet or 4096 bytes for most Frame Relay systems. The synchronous transmission mode enables the reception system to accomplish accurate signal reception, and is appropriate for high-speed transmission.

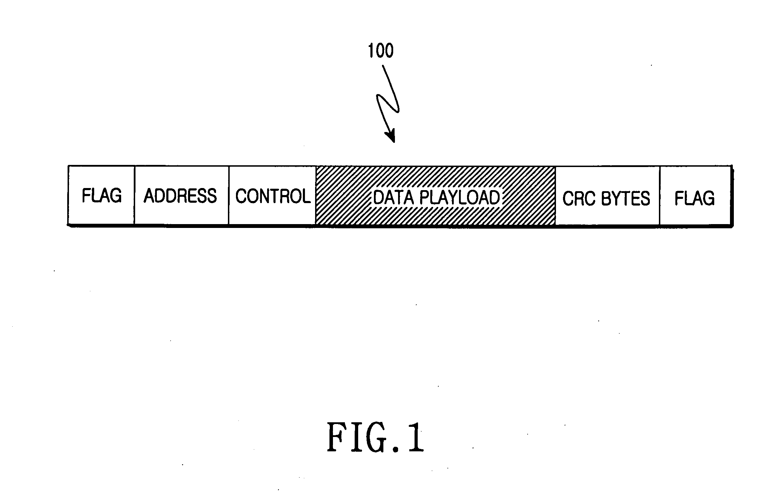

A representative example of a frame structure using the synchronous transmission method is a HDLC (High-Level Data Link Control) frame structure. FIG. 1 illustrates the general structure of an HDLC frame.

As shown, the flag "F" is a sequence 01111110 which delimits the start of the frame. A technique known as bit stuffing is used to insert additional zeros into the data so that a flag sequence never appears anywhere but at the start and end of a frame. These extra bits are "unstuffed" again by the receiver. The address "A" field is usually one byte, but may be more. It is used to indicate the sender or intended receiver of the frame. It is possible to have multiple stations connected to a single wire, and to design the system so that each receiver only "sees" frames with its own address. By this means multiple stations can communicate with each other using just one line (for instance on a Local Area Network). The control "C" field is one or more bytes. It contains information on the type of frame (for instance, whether this is a frame containing user data or a supervisory frame which performs some sort of link control function). It also often contains a rotating sequence number that allows the receiver to check that no frame has been lost.

The "payload" of the frame is the data field. The data in this field is completely transparent. In fact, it does not even have to be organized in 8 bit bytes, it is a purely arbitrary collection of bits. Following the data field are two bytes comprising the Cyclic Redundancy Check (CRC). The value of these bytes is the result of an arithmetic calculation based on every bit of data between the flags. When the frame is received, the calculation is repeated and compared with the received CRC bytes. If the answers match then we are sure to a very high degree of certainty that the frame has been received exactly as transmitted. If there is a CRC error the received frame is usually discarded. Finally, the frame is terminated by another flag character.

As shown in FIG. 1, the "F", "A" and "C" fields are sequentially arranged in the HDLC frame, and transmission/reception data is arranged between the "C" field. and the frame check sequence (FCS) shown in FIG. 1 a cyclical redundancy code (CRC). That is, the synchronous transmission mode transmits a data block in the form of a frame wherein start and stop signals are grouped. As a result, a sender sequentially transmits bit streams of a medium. And, a receiver detects start/end points of such information bit streams, and receives data transmitted from the sender.

Alternatively, in the Asynchronous Transfer Mode (ATM), without establishing synchronization of transmission/reception signals it becomes necessary to add a start signal and a stop signal to the front and the rear of transmission data, and then transmit the data having the added signals.

Since the asynchronous transfer mode (ATM) does not transmit a long bit stream, timing between transmission and reception is not a consideration. In the ATM mode, data is transmitted one-character by one-character, each character having a length of between 5-8 bits.

The asynchronous transfer mode (ATM) can establish signal transmission in a variety of formats, irrespective of different transfer rates, different data formats, and different traffic characteristics making the ATM mode compatible for use with future services.

Twisted pair, coax, or wireless are typically used in a conventional subscriber network. In such a network, the bandwidth can sufficiently accommodate subscriber's requests. However, for those environments requiring wider bandwidth in the future, a conventional network, such as those described above will not suffice, and a new network should be designed to accommodate the increased bandwidth demand. It is also noted that subscriber bandwidth requirements increase geometrically on account of digital broadcasts.

Typically an optical network adopts a synchronous transmission mode. Under this condition, such optical network service is easily interfaced with the same kinds of services, but an interface between a broadcast signal and an Internet signal results in increased costs. So, it is difficult to apply the interface between the broadcast and Internet signals to a subscriber network.

### SUMMARY OF THE INVENTION

Accordingly, the present invention provides an optical subscriber network system for performing a bi-directional transmission/reception of digital broadcast signals and Internet signals.

According to one aspect, the optical subscriber network is comprised of a server-side optical transmitter and a subscriber-side optical receiver, the server-side optical transmitter and the subscriber-side optical receiver have an asynchronous structure so as to provide extended service capabilities while maintaining existing network functionality. The extended service is provided by the optic subscriber network when additional bandwidth is requested by a subscriber.

According to another aspect, the optical subscriber network can form a more intelligent network structure by separating heterogeneous data.

According to yet another aspect, the optical subscriber network system of the invention includes a server-side bidirectional optical transmitter and a subscriber-side bidirectional optical receiver. The server-side bidirectional optical transmitter includes a first semiconductor laser for transmitting digital broadcast signals; a second semiconductor laser for transmitting downstream Internet data; a server-side photodiode for receiving upstream Internet data; a BPF (Band Pass Filter) mounted in front of the server-side photodiode, for selecting the upstream Internet data only; and a multi-branch optical waveguide element for separating I/O (Input/Output) data. The subscriber-side bidirectional optical receiver includes a subscriber-side multi-branch optical waveguide element for separating data transmitted from the server-side directional optical transmitter; a first photodiode for receiving digital broadcast data transmitted from the server-side bidirectional optical transmitter; a second photodiode for receiving downstream Internet data transmitted from the server-side. bidirectional optical transmitter; and a subscriber-side semiconductor laser for the upstream Internet data.

The optical subscriber network system of the invention advantageously performs bidirectional optical transmission/reception in different formats and can accommodate subscriber requests for additional bandwidth. Further, the optical subscriber network system is easily upgradable to accommodate future requests for wider bandwidth requirements. Still further, the optical subscriber network system of the invention separates heterogeneous data from other data, and then stores the heterogeneous data, thereby forming a more intelligent network structure.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is an illustration of the general structure of an HDLC frame according to the prior art.

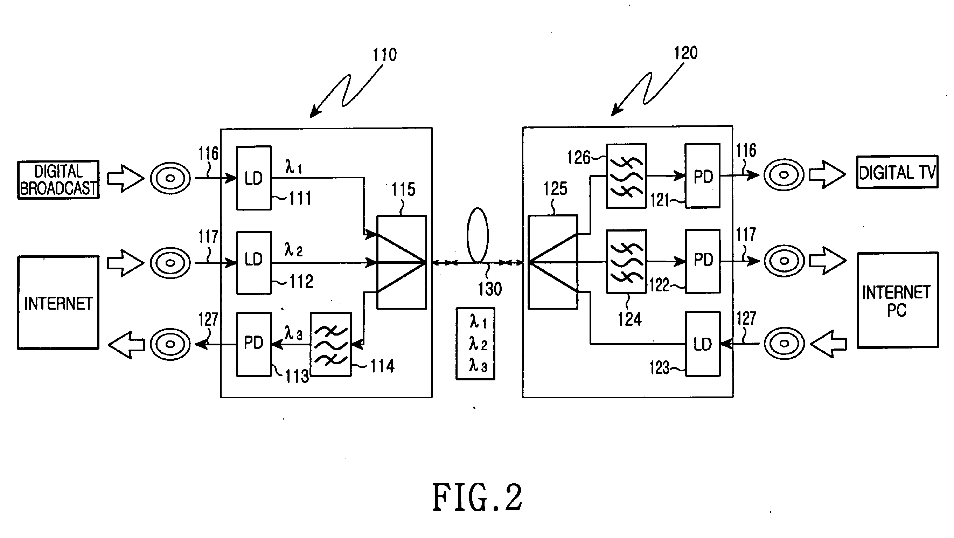

Fig. 2 is a block diagram of a transmitter/receiver system of an optical subscriber network structure in accordance with a preferred embodiment of the present invention.

### DETAILED DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

Referring now to the drawings, Fig. 1 illustrates an optical subscriber network system 100 for bidirectionally transmitting/receiving broadcast digital broadcast/communication signals including a server-side bidirectional optical transmitter 110 and a subscriber-side bidirectional optical receiver 120. The server-side bidirectional optical transmitter 110 includes a first semiconductor laser 111; a second semiconductor laser 112; a server-side photodiode 113; a server-side BPF (Band Pass Filter) 114; and a multi-branch optical waveguide element 115.

The server-side first semiconductor laser 111 is a Vertical Cavity Surface Emitter Laser (VSCEL) which modulates digital broadcast data 116 to an optical signal and transmits the optically modulated signal to a subscriber side bi-directional optical receiver 120.

The server-side second semiconductor laser 112 is a VCSEL for modulating downstream internet data 117 to an optical signal and transmitting the optically modulated signal to the subscriber-side bidirectional optical receiver 120.

The server-side photodiode 113 is a detecting light element to detect upstream internet data 127 transmitted from a downstream subscriber (Internet PC).

The server-side BPF(Band Pass Filter) 114 is positioned between the server-side photodiode 113 and the server-side multi-branch optical waveguide element 115, for filtering all traffic except for the upstream internet data 127 transmitted from the downstream subscriber (Internet PC).

The server-side multi-branch optical waveguide element 115 separates the upstream internet data 127 transmitted from the first and second semiconductor laser 111 and 112, and the upstream internet data 127 transmitted from the downstream subscriber (Internet PC).

The subscriber-side bidirectional optical receiver 120 is comprised of a subscriber-side multi-branch optical waveguide element 125 for separating data transmitted from the server-side bidirectional optical transmitter 110; a first photodiode 121 for receiving digital broadcast data modulated to an optical signal 116; a first BPF(Band Pass Filter) 126; a second BPF(Band Pass Filter)124; a second photodiode 122 for receiving down stream internet data 117; a subscriber-side semiconductor laser 123 for modulating upstream internet data 127 to an optical signal.

The subscriber-side multi-branch optical waveguide element 125 divides the respective optical signals 116 and 117 transmitted from the server-side bidirectional transmitter 110 and upstream internet data 127 transmitted from the semiconductor laser 123 into independent channels λ₁, λ₂, λ₃ 130, respectively.

The first photodiode 121 detects the optically modulated digital broadcast data 116 transmitted from the first semiconductor laser 111 and transmits the optically modulated signal to a digital receiver (e.g., digital TV).

The second photodiode 122 detects downstream internet data 117 transmitted from the second semiconductor laser 112 and reconfigures the data into an available form suitable for viewing by a subscriber on a subscriber computer (Internet PC).

The subscriber-side semiconductor laser 123 optically modulates upstream internet data 127 which the subscriber (Internet PC) intends to transmit to the server (Internet) , and is paired with subscriber-side second photodiode 122 so as to accomplish bi-directional transmission/reception of internet signals.

The first BPF (Band Pass Filter) 126 positioned between the subscriber-side multi-branch optical waveguide element 125 and the first photodiode 121, filters digital broadcast signals or wavelength bands except for the optically modulated digital broadcast data 116 transmitted from the server-side first semiconductor laser 111.

The second BPF 124 positioned between the subscriber-side multi-branch optical waveguide element 125 and the second photodiode 122, and blocks wavelength bands and signals except for the downstream internet data 117 transmitted from the server-side second semiconductor 112.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. An optical subscriber network system for performing bidirectional transmission/reception of digital broadcast signals and Internet signals, comprising:
(I) a server-side bidirectional transmitter comprising:
(a) a first semiconductor laser for optically modulating and transmitting the optically modulated digital broadcast signals;
(b) a second semiconductor laser for transmitting downstream Internet data;
(c) a server-side photodiode for receiving upstream Internet data;
(d) a band pass filter (BPF) coupled to an input of the server-side photodiode, for selecting the upstream Internet data; and
(e) a server-side multi-branch optical waveguide element for separating the optically modulated digital broadcast signals, the downstream Internet data and the upstream Internet data; and
(II) a subscriber-side bidirectional optical receiver comprising:
(a) a subscriber-side multi-branch optical waveguide element for separating data transmitted from the server-side bidirectional optical transmitter;
(b) a subscriber-side first photodiode for detecting the optically modulated digital broadcast signals transmitted from the server-side first semiconductor laser;
(c) a subscriber-side second photodiode for detecting the downstream Internet data transmitted from the server-side second semiconductor laser; and
(d) a subscriber-side semiconductor laser for transmitting the upstream Internet data transmitted from a subscriber part.

2. The optical subscriber network system as set forth in Claim 1, wherein the server-side first semiconductor laser optically modulates digital broadcast data and transmits the optically modulated signal to the subscriber side bi-directional optical receiver.

3. The optical subscriber network system as set forth in Claim 1, wherein the server-side second semiconductor laser optically modulates downstream Internet data and transmits the optically modulated signal to the subscriber-side bidirectional optical receiver.

4. The optical subscriber network system as set forth in claim 1, wherein the server-side photodiode is a detecting light element for detecting upstream Internet data transmitted from a downstream subscriber.

5. The optical subscriber network system as set forth in claim 1, wherein the server-side band pass filter (BPF) filters all data except for the upstream Internet data transmitted from a subscriber part.

6. The optical subscriber network system as set forth in claim 1, wherein the server-side bidirectional optical transmitter and the subscriber-side bidirectional optical receiver have a mutually asymmetric transmission structure.

7. The optical subscriber network system as set forth in claim 1, wherein the subscriber-side bidirectional optical receiver further comprises a first band pass filter (BPF) between the subscriber-side first photodiode and the multi-branch optical waveguide element.

8. The optical subscriber network system as set forth in claim 7, wherein the subscriber-side bi-directional optical receiver filters all digital broadcast signals and wavelength bands except for the optically modulated digital broadcast data transmitted from the server-side first semiconductor laser.

9. The optical subscriber network system as set forth in claim 1, wherein the subscriber-side bidirectional optical receiver further comprises a second band pass filter (BPF) situated between the subscriber-side second photodiode and the multi-branch optical waveguide element.

10. The optical subscriber network system as set forth in claim 9, wherein the second band pass filter (BPF) filters all wavelength bands and signals except for the downstream internet data transmitted from the server-side second semiconductor.

11. The optical subscriber network system as set forth in claim 1, wherein the first photodiode detects the optically modulated digital broadcast data transmitted from the first semiconductor laser and transmits the optically modulated signal to a digital receiver.

12. The optical subscriber network system as set forth in claim 1, wherein the subscriber-side second photodiode detects downstream internet data transmitted from the server-side second semiconductor laser and reconfigures the data into an form suitable for viewing by a subscriber on a subscriber computer.

13. The optical subscriber network system as set forth in claim 1, wherein the photodiodes are VCSELs (Vertical Cavity Surface Emitter Lasers) having different wavelength bands.
